# EUROPEAN PATENT APPLICATION

(11) **EP 4 668 675 A1**
(43) Date of publication of application: **24.12.2025**
(21) Application number: 25165111.3
(22) Date of filing: 20.03.2025
(51) Int. Cl.: H04L 9/40, H04L 61/4511, H04L 101/345

(54) **ACCESS CONTROL METHOD AND SYSTEM FOR APPLICATION, DEVICE, MEDIUM, AND PROGRAM PRODUCT**

(30) Priority: 17.06.2024 CN 202410780623
(71) Applicant: Beijing Volcano Engine Technology Co., Ltd., Beijing 100190 (CN)
(72) Inventor: SU, Hang, 048583 Singapore (SG); DENG, Tian, 048583 Singapore (SG)
(74) Representative: Marks & Clerk LLP

(57) **Abstract**

The present disclosure relates to the field of network technologies and discloses an application access control method and system, and a device, a medium and a program product thereof. The present disclosure provides an application access control method. The method includes: generating, by a security management application client, an access request after detecting access to a target application, and sending the access request to a central domain name system; performing, by the central domain name system, domain name resolution on the access request to obtain a target application domain name of the target application, and sending the target application domain name to an application gateway; and determining, by the application gateway, a target access policy for the target application based on a matching result of the target application domain name in a first configuration file, and controlling, based on the target access policy, a terminal device.

## Description

### FIELD

The present disclosure relates to the field of network technologies and, in particular, to an access control method and system for an application, and a device, a medium and a program product thereof.

### BACKGROUND

Software as a Service (SaaS) is a software application mode that provides software services based on the Internet, so that a terminal device can access an application based on cloud services through the Internet.

In related art, with the popularization of paperless office, more and more enterprises or other organizations choose to use software applications to store business data and perform daily operation work. Since a terminal device can access a SaaS application in a private network/dedicated network of an enterprise or other organization or in a public network, when the terminal device accesses the SaaS application in the private network/dedicated network of the enterprise or other organization, data security inside the enterprise or other organization can be easily affected. In view of this, a method that can ensure application access security is urgently needed. An application gateway (alias: proxy server) is a device between networks that can connect one network with another network to provide a specific application.

### SUMMARY

In view of this, the present disclosure provides an access control method for an application and system, and a device, a medium and a program product thereof to solve the problem of low application access security.

In a first aspect, the present disclosure provides an access control method for an application. The method is applied to an access control system, and the access control system includes a security management application client, a security management application server, a central domain name system and an application gateway. The method includes:
generating, by the security management application client, a domain name resolution request after detecting an access request from a terminal device where the security management application client is located for a target application, and sending the domain name resolution request to the central domain name system;
performing, by the central domain name system, domain name resolution on the domain name resolution request to obtain a target application domain name of the target application, and sending the target application domain name to the application gateway; and
determining, by the application gateway, a target access policy for the target application based on a matching result of the target application domain name in a first configuration file, and controlling, based on the target access policy, the terminal device where the security management application client is located to access the target application, where the first configuration file is used for characterizing a correspondence between application domain names and access policies, and the first configuration file is provided by the security management application server.

In a second aspect, the present disclosure provides an access control system. The system includes:
a security management application client, configured to generate a domain name resolution request after detecting an access request from a terminal device where the security management application client is located for a target application, and send the domain name resolution request to a central domain name system;
the central domain name system, configured to perform domain name resolution on the domain name resolution request to obtain a target application domain name of the target application, and send the target application domain name to an application gateway;
the application gateway, configured to receive the target application domain name, determine a target access policy for the target application based on a matching result of the target application domain name in a first configuration file, and control, based on the target access policy, the terminal device where the security management application client is located to access the target application, where the first configuration file is used for characterizing a correspondence between application domain names and access policies, and the first configuration file is provided by a security management application server; and
the security management application server, configured to store the first configuration file.

In a third aspect, the present disclosure provides a computer device. The computer device includes a memory and a processor. The memory is in communication connection with the processor. The memory has a computer instruction stored therein. The processor executes the computer instruction to perform the access control method for the application according to the first aspect or any one of the implementations thereof.

In a fourth aspect, the present disclosure provides a computer-readable storage medium. The computer-readable storage medium has a computer instruction stored thereon. The computer instruction, when executed by a computer, causes the computer to perform the access control method for the application according to the first aspect or any one of the implementations thereof.

In a fifth aspect, the present disclosure provides a computer program product. The computer program product includes a computer instruction. The computer instruction, when executed by a computer, causes the computer to perform the access control method for the application according to the first aspect or any one of the implementations thereof.

According to the access control method for the application provided in this embodiment, the target access policy for the target application is determined by means of domain name resolution, so that occurrence of false recognition or missing recognition can be effectively avoided. Furthermore, the terminal device where the security management application client is located is controlled to access the target application based on the target access policy, so that the access control process can be more targeted, thereby effectively improving application access security and ensuring data security.

### BRIEF DESCRIPTION OF THE DRAWINGS

In order to illustrate the technical solutions in the embodiments of the present disclosure or in the prior art more clearly, the following briefly introduces the drawings that need to be used in the description of the embodiments or the prior art. Apparently, the drawings in the following description show some embodiments of the present disclosure, and a person of ordinary skill in the art may still derive other drawings from these drawings without creative efforts.

FIG. 1 is a schematic diagram of a system architecture of an access control system according to an embodiment of the present disclosure;
FIG. 2 is a schematic flowchart of a method for access control for an application according to an embodiment of the present disclosure;
FIG. 3 is a schematic diagram of interaction for domain name resolution according to an embodiment of the present disclosure;
FIG. 4 is a schematic flowchart of another method for access control for an application according to an embodiment of the present disclosure;
FIG. 5 is a schematic diagram of interaction for access control according to an embodiment of the present disclosure; and
FIG. 6 is a schematic diagram of a hardware structure of a computer device according to an embodiment of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms, and should not be construed as limited to the embodiments set forth herein. On the contrary, these embodiments are provided for a more thorough and complete understanding of the present disclosure. It should be understood that the drawings and embodiments of the present disclosure are only used for illustration, and are not intended to limit the protection scope of the present disclosure.

In the description of the embodiments of the present disclosure, the term "include/comprise" and similar terms should be understood as open inclusion, that is, "include/comprise but not limited to". The term "based on" should be understood as "based at least in part on". The term "one embodiment" or "an embodiment" should be understood as "at least one embodiment". The term "some embodiments" should be understood as "at least some embodiments". Other explicit and implicit definitions may also be included below.

In this document, unless explicitly stated, performing a step "in response to A" does not mean that the step is performed immediately after "A", but may include one or more intermediate steps.

It can be understood that data involved in the technical solutions of the present disclosure (including but not limited to the data itself, the acquisition, use, storage or deletion of the data) should comply with the requirements of corresponding laws, regulations and related provisions.

It can be understood that before using the technical solutions disclosed in the embodiments of the present disclosure, relevant users should be informed of the type, use scope, use scene, etc. of information involved in the present disclosure in an appropriate manner according to relevant laws and regulations, and authorization from the relevant users should be obtained, where the relevant users may include any type of right holder, such as an individual, an enterprise, or a group.

For example, when receiving an active request from a user, prompt information is sent to the relevant user, so as to explicitly prompt the relevant user that the operation requested to be performed will require the acquisition and use of information of the relevant user, so that the relevant user can independently select whether to provide information to software or hardware such as an electronic device, an application, a server or a storage medium that performs the operation of the technical solutions of the present disclosure according to the prompt information.

As an optional but non-restrictive implementation, the manner of sending the prompt information to the relevant user in response to receiving the active request from the relevant user may be, for example, a pop-up window, and the prompt information may be presented in the pop-up window in a text form. In addition, the pop-up window may also carry a selection control for the user to select "agree" or "disagree" to provide information to the electronic device.

It can be understood that the above process of notifying and obtaining user authorization is only illustrative, and does not constitute a limitation to the implementations of the present disclosure. Other manners that satisfy relevant laws and regulations may also be applied to the implementations of the present disclosure.

Office security usually involves security management of networks, identities and terminals. By implementing private network networking, access control, management of terminals in the private network and information security protection, digital office can be made safer, more efficient and easier to use. The security management at the network layer can ensure that the private network such as an office network can operate safely and efficiently, thereby ensuring that business data can be transmitted and stored safely. The security management at the identity layer can improve the efficiency and security of identity authentication for users to access the private network. The security management at the terminal layer can realize the unified management of terminal devices, data anti-leakage and terminal threat protection in the private network, thereby ensuring the security of enterprise data.

In practical applications, the security management of the network, identity and terminal can realize technical association in multiple technical branches such as networking strategy, network admission and control, remote access, unified terminal management, terminal detection and response, enterprise data leakage prevention and identity authentication management, so that the digital office is made simpler, more efficient and easier to implement.

In related art, since a terminal device can access a SaaS application in a private network/dedicated network of an enterprise or other organization or in a public network, when the terminal device accesses the SaaS application in the private network/dedicated network of the enterprise or other organization, data security inside the enterprise or other organization can be easily affected. In order to improve the security of application access, the terminal device is controlled to access the SaaS application by means of scanning an Internet Protocol (IP) address, an IP segment and a port in the private network/dedicated network. However, since the IP address of the SaaS application is not unique, false recognition or missing recognition may occur, which easily affects the access security of the application.

In view of this, according to an embodiment of the present disclosure, an embodiment of an access control method for an application is provided. It should be noted that the steps shown in the flowcharts of the drawings may be executed in a computer system such as a set of computer-executable instructions, and although the logical order is shown in the flowcharts, in some cases, the steps shown or described may be executed in an order different from that here.

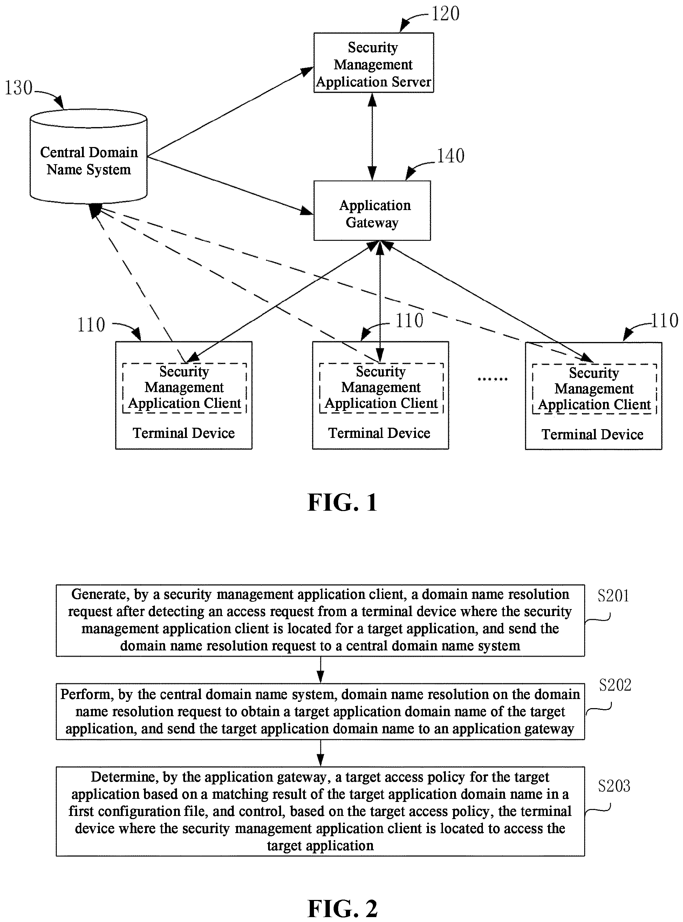

As shown in FIG. 1, the system architecture of the access control system adopted in the embodiment of the present disclosure mainly includes: a security management application client 110 for enterprise internal members, a security management application server 120, a central domain name system 130, and an application gateway 140.
(1) The security management application client 110 is deployed on various terminal devices inside an enterprise, and enterprise internal members can access application resources such as applications hosted in an Internet data center, a public cloud, a private cloud, and SaaS applications through business application clients on the terminal devices.
(2) The security management application server 120 is configured to manage the security management application client 110 and the application gateway 140 to control the terminal device where each security management application client 110 is located to access application resources.
(3) The central domain name system 130 is connected with the security management application client 110, the application gateway and the server. The central domain name system 130 is configured to perform domain name resolution on a domain name resolution request sent by the security management application client 110, and forward the obtained domain name resolution result to the application gateway 140 and the security management application server 120 respectively.
(4) The application gateway 140 is deployed at the headquarters of the enterprise, a branch network, an Internet data center (abbreviated as IDC computer room), or cloud services (such as public cloud and private cloud). The application gateway is connected to the security management application client 110 in the organization/region where the application gateway is located, and is configured to control each security management application client 110 to access application resources.

In the present embodiment, an access control method for an application is provided, which is applied to the access control system shown in FIG. 1. FIG. 2 is a flowchart of a method for access control for an application according to an embodiment of the present disclosure, and as shown in FIG. 2, the process includes the following steps:
Step S201: generating, by a security management application client, a domain name resolution request after detecting an access request from a terminal device where the security management application client is located for a target application, and sending the domain name resolution request to a central domain name system.

The target application may be an application deployed in the same intranet as the security management application client, or may be an application deployed in an extranet, which may be determined according to actual access requirements.

After detecting the access request from the terminal device where the security management application client is located for the target application, the security management application client generates the domain name resolution request to request the central domain name system to perform domain name resolution, so as to specify the target application that the terminal device where the security management application client is located needs to access, which is convenient for subsequent targeted access.

Step S202: performing, by the central domain name system, domain name resolution on the domain name resolution request to obtain a target application domain name of the target application, and sending the target application domain name to an application gateway.

After obtaining the domain name resolution request, the central domain name system performs domain name resolution on the obtained domain name resolution request to specify the target application that the security management application client needs to access, thereby obtaining a domain name resolution result. The domain name resolution result includes the target application domain name of the target application.

In some optional implementation scenes, the domain name resolution request includes a target IP address of the target application, and the central domain name system has a plurality of mapping relationships between IP addresses and domain names built therein. Therefore, in the central domain name system, the domain name resolution request can be resolved by means of IP address matching, thereby obtaining the target application domain name of the target application. In some examples, in the central domain name system, a plurality of sub-domain names corresponding to the target IP address may also be determined by means of wildcard domain name resolution, thereby helping to ensure the reliability of the target application domain name, thereby reducing the occurrence of missing recognition.

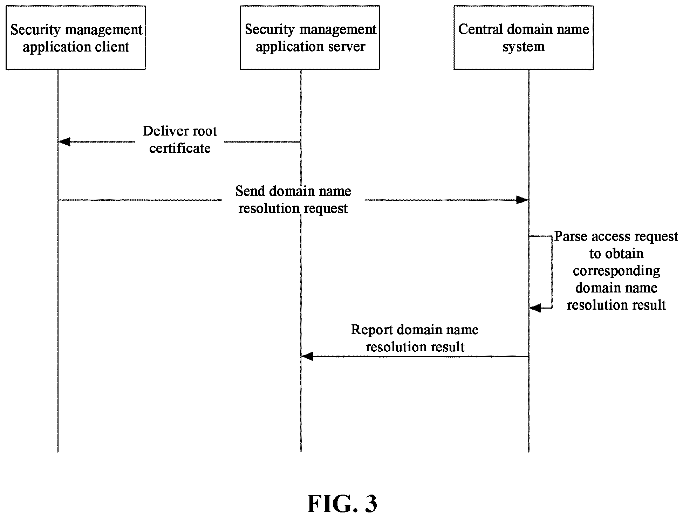

In other optional implementation scenes, after the domain name resolution is completed, the central domain name system may also forward the obtained target application domain name and the domain name resolution request to the security management application server, so that the security management application server can specify that the security management application client currently needs to access the target application. As shown in FIG. 3, in order to enable the security management application client to detect the access to the target application, the security management application server pre-establishes an identity authentication relationship with the security management application client by means of delivering a root certificate, and then after the security management application client detects the access request for the target application, the security management application client generates the domain name resolution request and sends the domain name resolution request to the central domain name system, so as to determine the domain name resolution result corresponding to the domain name resolution request through the central domain name system.

In order to enable the application gateway to specify the target application domain name to be accessed by the security management application client, the central domain name system forwards the target application domain name to the application gateway, so that the application gateway can perform targeted control according to the access of the security management application client.

Step S203: determining, by the application gateway, a target access policy for the target application based on a matching result of the target application domain name in a first configuration file, and controlling, based on the target access policy, the terminal device where the security management application client is located to access the target application.

The first configuration file is used for characterizing a correspondence between application domain names and access policies, and the first configuration file is provided by the security management application server. That is, different access policies are configured for different application domain names in the security management application server in advance to obtain the first configuration file, and the first configuration file is sent to the application gateway, so that the application gateway can perform targeted control according to the first configuration file obtained in advance after receiving the target application domain name, thereby improving the security and performance of the access control system. For example, the content of the access policy may include: setting different access control lists for different application domain names, and then limiting the access permission to resources of a specific IP address range or user group through the corresponding access control list. Alternatively, the content of the access policy may include: setting different security policies for different domain names, such as a firewall rule and an intrusion detection system, so as to protect the system from malicious attacks. Alternatively, the content of the access policy may include: distributing requests to different security management application servers according to the domain name resolution result, so as to realize load balance and improve the performance and reliability of the system.

Since the same IP address may be shared by a plurality of websites or forged by a malicious attacker, resulting in an incorrect access policy, the target access policy is determined by means of domain name resolution, so that the determined target access policy can be more reliable.

After obtaining the target application domain name, the application gateway matches the target application domain name with the plurality of application domain names in the first configuration file to determine whether there is an application domain name matching with the target application domain name among the plurality of application domain names in the first configuration file, thereby obtaining a matching result. When the matching result represents that there is an application domain name matching with the target application domain name among the plurality of application domain names, the access policy corresponding to the application domain name matching with the target application domain name may be used as the target access policy, and then the terminal device where the security management application client is located is controlled to access the target application according to the target access policy, so that the access control process can be more targeted, thereby making the access safer and helping to ensure data security, in other words, so that application access security can be effectively improved and data security can be ensured..

According to the access control method for the application provided in this embodiment, the target access policy for the target application is determined by means of domain name resolution, so that occurrence of false recognition or missing recognition can be effectively avoided. Furthermore, the terminal device where the security management application client is located is controlled to access the target application based on the target access policy, so that the access control process can be more targeted, thereby effectively improving application access security and ensuring data security.

In some optional implementations, in a process where the application gateway controls the terminal device where the security management application client is located to access the target application based on the target access policy, if the target access policy is a first target access policy, the application gateway sends a first access resource to the security management application client to prevent the terminal device where the security management application client is located from accessing the target application.

The first target access policy may be understood as a policy used to prevent the terminal device where the security management application client is located from accessing the target application. The first access resource may be an access resource that is preset and used to prompt that the access request is an invalid request.

When the application gateway determines that the target access policy corresponding to the target application is the first target access policy, it may be determined that the target application is an object that is forbidden to access. Therefore, in order to save the waiting time of the security management application client, the first access resource is sent to the security management application client to prevent the terminal device where the security management application client is located from accessing the target application, which can not only effectively reduce the occurrence of risks such as data leakage and unauthorized access, thereby improving data security, but also help to improve the network performance and reduce the number of polling.

In some optional implementation scenes, the first access resource may be a prompt page with a request invalid identification, and then the prompt page is sent to the security management application client, which can make the prompt for preventing the terminal device where the security management application client is located from accessing the target application more intuitive and clear. For example, the content of the request invalid identification may include "access error" or "the target application has been disabled", etc., which may be set according to requirements. In other optional examples, the first access resource may also be other forms of access prevention information, such as a pop-up prompt window or an error code.

In some optional implementations, after sending the first access resource to the security management application client, the application gateway sends access blocking information to the security management application server to prompt that the access to the target application by the terminal device where the security management application client is located is blocked. That is, in order to enable the security management application client to specify that the target application is an object that is not allowed to access, the access blocking information is sent to the security management application server to avoid the security management application client from sending the access request again, thereby helping to improve the management reliability of the security management application server, facilitating subsequent unified management of the security management application client, and then being able to effectively improve data security.

The security management application server receives and saves the access blocking information to record an event that the security management application client requests to access the target application but is blocked. In some optional examples, after sending the first access resource to the security management application client, the application gateway starts a timing task according to a preset period, to send the access blocking information in a timing manner, so as to ensure that the security management application server can specify the access status of a plurality of security management application clients in time, which is convenient for subsequent targeted control of access, thereby improving application access security. The timing task refers to a task for sending the access blocking information to the security management application server at regular intervals.

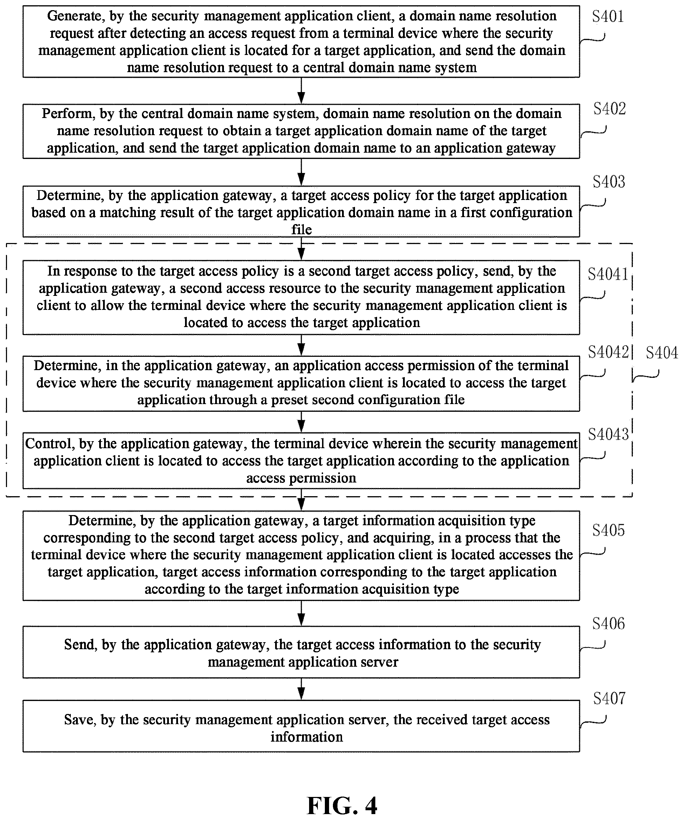

In the present embodiment, an access control method for an application is provided, which is applied to an access control system. FIG. 4 is a flowchart of a method for access control for an application according to an embodiment of the present disclosure, and as shown in FIG. 4, the process includes the following steps:
Step S401: generating, by a security management application client, a domain name resolution request after detecting an access request from a terminal device where the security management application client is located for a target application, and sending the domain name resolution request to a central domain name system.

Step S402: performing, by the central domain name system, domain name resolution on the domain name resolution request to obtain a target application domain name of the target application, and sending the target application domain name to an application gateway.

Step S403: determining, by the application gateway, a target access policy for the target application based on a matching result of the target application domain name in a first configuration file.

Step S404: controlling, by the application gateway, the terminal device where the security management application client is located to access the target application based on the target access policy.

Specifically, Step S404 includes the following step.
Step S4041: if the target access policy is a second target access policy, sending, by the application gateway, a second access resource to the security management application client to allow the terminal device where the security management application client is located to access the target application.

The second target access policy may be understood as a policy used to allow the terminal device where the security management application client is located to access the target application. The second access resource may be understood as an access resource in the target application that can meet the access requirement corresponding to the access request.

When the application gateway determines that the target access policy corresponding to the target application accessed by the terminal device where the security management application client is located is the second target access policy, it may be determined that the target application is an object that is allowed to access. Therefore, in order to meet the access requirement of the security management application client, the application gateway sends the second access resource to the security management application client to enable the security management application client to access the target application, thereby realizing the access function.

In other optional implementations, Step S404 further includes the following step.
Step S4042: determining, by the application gateway, an application access permission of the terminal device where the security management application client is located to access the target application through a preset second configuration file.

In order to improve data security and reduce the occurrence of being tampered or leaked, the application access permission of the terminal device where the security management application client is located to access the target application is determined through the preset second configuration file, so as to control the security management application client to access the target application in a manner of access permission control. The second configuration file is used for characterizing a correspondence between the same application and application access permissions of a plurality of security management application clients, and the second configuration file is provided by the security management application server. For example, the application access permission may be any one or more of the following access permissions: allowing downloading, not allowing downloading, allowing reading, not allowing writing, etc.

Step S4043: controlling, by the application gateway, the terminal device where the security management application client is located to access the target application according to the application access permission.

The application gateway controls the terminal device where the security management application client is located to access the target application according to the application access permission, which can effectively ensure the access security, and reduce the occurrence of the risk of unauthorized access, thereby helping to improve the reliability and security.

According to the access control method for the application provided in this embodiment, after determining that the target application is an object that can be allowed to access, the application gateway controls the terminal device where the security management application client is located to access the target application by means of sending the second access resource to the security management application client, so that the access requirement of the security management application client can be met. Furthermore, the application access permission of the target application is limited in the manner of permission control, so that the access security of the security management application client can be ensured. Meanwhile, it can also ensure that the security management application client can access according to the specified application permission, thereby helping to improve the reliability and security.

In some optional implementations, the access control method for the application further includes the following step.
Step S405: determining, by the application gateway, a target information acquisition type corresponding to the second target access policy, and acquiring, in a process where the terminal device where the security management application client is located accesses the target application, target access information corresponding to the target application according to the target information acquisition type.

In order to ensure access security, so that when an abnormality occurs in the security management application client, the cause of the abnormality can be quickly located, the application gateway determines the target information acquisition type corresponding to the second target access policy, so that in the subsequent process of controlling the terminal device where the security management application client is located to access the target application, the access process can be managed in a targeted manner. For example, the target information acquisition type may include an account for sending the access request, a trigger time of the access request, device information corresponding to the security management application client, a specific name corresponding to the application to be accessed, etc., which may be set according to requirements.

In some optional examples, the target information acquisition type is determined through a third configuration file. The third configuration file is used for characterizing a correspondence between the target access policy and the information acquisition type. The third configuration file is provided by the security management application server. In other optional examples, the target information acquisition type may also be determined by means of database query or network request.

In order to ensure the security and compliance of access, in the process where the terminal device where the security management application client is located accesses the target application, the application gateway acquires the target access information corresponding to the target application, so that subsequent related access control analysis can be performed, which is convenient for timely identification and response to potential security risks, thereby improving the effectiveness of access control to the target application. The target access information is access information corresponding to the target information acquisition type. The related access control analysis may include but not limited to tracking access behaviors, auditing and risk analysis.

Step S406: sending, by the application gateway, the target access information to the security management application server.

Step S407: saving, by the security management application server, the received target access information.

The security management application server saves the received target access information to meet the requirement of the enterprise-level application for targeted management of its own data, thereby helping to improve data security and manageability, and ensuring the integrity and consistency of the target access information.

According to the access control method for the application provided in this embodiment, the target access information is acquired when it is determined that the security management application client can access the target application, so that when the security management application client has an abnormality, the cause of the abnormality can be quickly located. Furthermore, when performing access control analysis subsequently, the reliability of the analysis result can be ensured, thereby helping to improve the effectiveness of access control to the application to be accessed.

In some optional implementations, the security management application server is connected to the security management application client through a root certificate, so that the security management application client can be trusted by the security management application server; the security management application server is connected to the application gateway through an intermediate certificate, so that the application gateway can communicate with the security management application server and the security management application client. The root certificate and the intermediate certificate are pre-configured through a management platform corresponding to the security management application server.

In order to facilitate the security management application client to specify the application that needs to be accessed controlled, so that the application gateway can perform targeted control on the access of the terminal device where the security management application client is located, the first configuration file is configured for the security management application server through the management platform corresponding to the security management application server, and the configured first configuration file is sent to the security management application client and the application gateway, so that information among the security management application server, the security management application client and the application gateway can be synchronized. The first configuration file includes an application domain name set, and the application domain name set includes application domain names of a plurality of applications and corresponding wildcard domain names. The use of the wildcard domain name can capture more possible variants or related sub-domain names, and reduce the occurrence of missing recognition or false recognition. Therefore, the application domain names corresponding to the applications that need to be accessed controlled and the corresponding wildcard domain names are added to the application domain name set in advance, so that the domain names that may be used by the applications can be covered as comprehensively as possible, thereby improving the identification accuracy and reducing the occurrence of missing recognition or false recognition, thereby helping to improve the reliability of application access control.

In order to facilitate the security management application client to specify whether the target application requested to be accessed by the terminal device where the security management application client is located needs to be accessed controlled, in the security management application client, after the access request from the terminal device where the security management application client is located for the target application is detected, the target application domain name of the application to be accessed is determined; if the application domain name or the wildcard domain name matching with the target application domain name is matched in the application domain name set, it is determined that the application to be accessed is the target application, and the domain name resolution request is generated, where the target application is an application corresponding to the application domain name or the wildcard domain name matching with the target application domain name; if the application domain name or the wildcard domain name matching with the target application domain name is not matched in the application domain name set, it is determined that the application to be accessed is a non-target application, and access prompt information is generated to be displayed on the terminal device where the security management application client is located to prompt that the access request is an invalid request.

That is, when the security management client detects the access request initiated by the terminal device where the security management client is located, the access request is resolved to determine the target application domain name of the application to be accessed. In order to determine whether the access request is a valid request, the target application domain name is matched with the plurality of application domain names and the wildcard domain names in the application domain name set to obtain the matching result. If the application domain name or the wildcard domain name matching with the target application domain name is matched in the application domain name set, it represents that the access request is a valid request. Therefore, it is determined that the application to be accessed is the target application, and the domain name resolution request is generated to perform targeted access control through the application gateway. The target application is an application corresponding to the application domain name or the wildcard domain name matching with the target application domain name. If the application domain name or the wildcard domain name matching with the target application domain name is not matched in the application domain name set, it represents that the access request is an invalid request, and it may be determined that the application to be accessed is a non-target application. Therefore, the access prompt information is generated to display the access prompt information on the terminal device where the security management application client is located and prompt that the access request is an invalid request, thereby saving the waiting time of the terminal device for a response. The identification is performed by means of domain name or wildcard domain name matching, so that the screening can be performed quickly, thereby helping to improve the efficiency of access control to the target application.

In other optional implementations, in the process where the security management application client sends the domain name resolution request to the central domain name system, the mirror file of the domain name resolution request is sent to the central domain name system, so that the central domain name system can analyze the mirror file to obtain more information about the domain name resolution request, such as the frequency, source, destination, etc. of the domain name resolution request, which helps to optimize the domain name resolution service provided by the central domain name system and improve its performance and reliability. Furthermore, the interaction with the central domain name system by means of mirror file transmission can reduce the occurrence of abnormalities in the original domain name resolution request, thereby helping to ensure the security of the domain name resolution request.

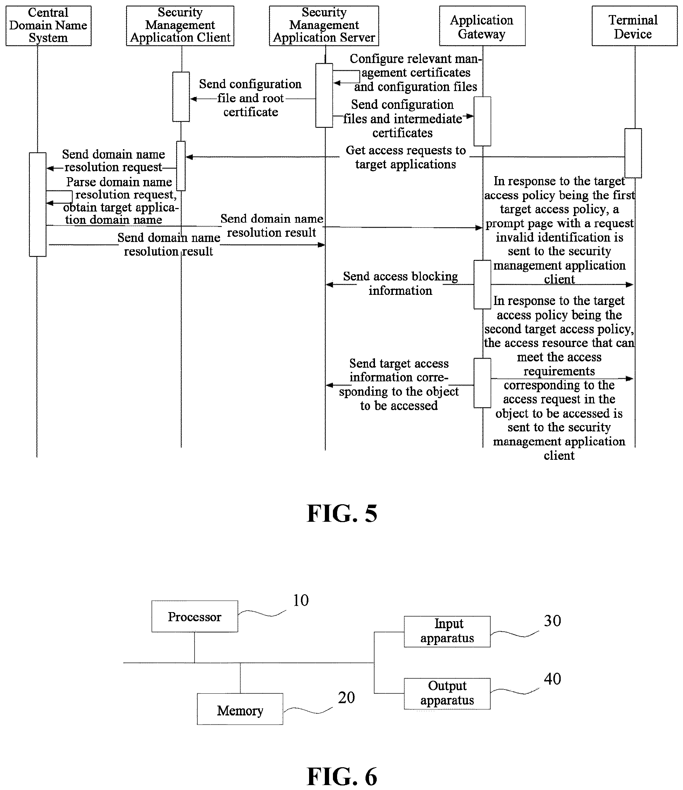

As one or more specific application embodiments of the embodiments of the present disclosure, the interaction process of controlling the terminal device where the security management application client is located to access the target application through the access control system may be as shown in FIG. 5, and includes the following steps.
A related management certificate and configuration files for access control for a plurality of applications are configured in the security management application server. The related management certificate includes a root certificate delivered to the security management application client and a gateway intermediate certificate delivered to the application gateway. The configuration files include a first configuration file, a second configuration file and a third configuration file. The first configuration file is used for characterizing a correspondence between application domain names and access policies. The second configuration file is used for characterizing a correspondence between the same application and application access permissions of a plurality of security management application clients. The third configuration file is used for characterizing a correspondence between a target access policy and an information acquisition type.

The security management application server delivers the configuration files and the root certificate to the security management application client, so that the security management application client can be trusted by the security management application server, and the configuration information is delivered to the security management application client, which can ensure that the security management application client accesses the target application in a targeted manner according to the correspondence defined by the configuration file.

The security management application server delivers the configuration files and the intermediate certificate to the application gateway to be synchronized with the security management application server and the security management application client, thereby ensuring that the application gateway can perform targeted control on the access to the target application according to the correspondence defined by the configuration file.

When the security management application client detects an access request from the terminal device where the security management application client is located for the target application, the security management application client generates a domain name resolution request and sends the domain name resolution request to the central domain name system.

The central domain name system performs domain name resolution on the received domain name resolution request to obtain a target application domain name of the target application.

The central domain name system sends the target application domain name to the application gateway and synchronizes the target application domain name with the security management application server, so that the security management application server can specify that the security management application client currently needs to access the target application.

The application gateway determines the target access policy for the target application based on the matching result of the target application domain name in the first configuration file. If the target access policy is the first target access policy, the application gateway sends the prompt page with the request invalid identification to the security management application client and sends the access blocking information to the security management application server to prompt that the access to the target application by the terminal device where the security management application client is located is blocked.

If the target access policy is the second target access policy, the application gateway sends the access resource in the target application that can meet the access requirement corresponding to the access request to the security management application client, and acquires the target access information corresponding to the target application according to the target information acquisition type corresponding to the second target access policy in the process where the terminal device where the security management application client is located accesses the target application, and sends the target access information to the security management application server. The security management application server saves the received target access information.

According to the access control method for the application provided in the present disclosure, the domain name resolution and forward proxy technologies can be utilized to identify the application based on the cloud security management application server to be accessed through the domain name and the wildcard domain name, thereby helping to improve the detection coverage and accuracy. Moreover, different access policies are configured for different domain names, so that the access control can be more flexible and reliable, thereby effectively improving the application access security and data security.

Based on the same inventive concept, an access control system is further provided in this embodiment. The system is used to implement the above embodiments and preferred implementations, and details will not be repeated here. As used below, the term "module" may implement a combination of software and/or hardware for a predetermined function. Although the system described in the following embodiments is preferably implemented in software, the implementation of hardware, or a combination of software and hardware is also possible and contemplated.

This embodiment provides an access control system. With reference to the system architecture shown in FIG. 1, the system includes:
a security management application client 110, configured to generate a domain name resolution request after detecting an access request from a terminal device where the security management application client 110 is located for a target application, and send the domain name resolution request to a central domain name system 130;
the central domain name system 130, configured to perform domain name resolution on the access request to obtain a target application domain name of the target application, and send the target application domain name to an application gateway 140;
the application gateway 140, configured to receive the target application domain name, determine a target access policy for the target application based on a matching result of the target application domain name in a first configuration file, and control, based on the target access policy, the terminal device where the security management application client 110 is located to access the target application, where the first configuration file is used for characterizing a correspondence between application domain names and access policies, and the first configuration file is provided by a security management application server 120; and
the security management application server 120, configured to store the first configuration file.

In some optional implementations, the application gateway 140 is configured to send a first access resource to the security management application client 110 to prevent the terminal device from accessing the target application when the target access policy is a first target access policy.

In some optional implementations, the application gateway 140 is further configured to send access blocking information to the security management application server 120 to prompt that the terminal device is prevented from accessing the target application; and
the security management application server 120 is configured to receive and save the access blocking information.

In some optional implementations, the application gateway 140 is configured to start a timing task according to a preset period, where the timing task is used to send the access blocking information to the security management application server.

In some optional implementations, the application gateway 140 is configured to send a second access resource to the security management application client 110 to allow the terminal device where the security management application client is located to access the target application when the target access policy is a second target access policy.

In some optional implementations, the application gateway 140 is further configured to determine an application access permission of the terminal device where the security management application client is located to access the target application through a preset second configuration file, and control the terminal device where the security management application client is located to access the target application according to the application access permission. The second configuration file is used for characterizing a correspondence between the same application and application access permissions of a plurality of security management application clients 110, and the second configuration file is provided by the security management application server 120; and
the application gateway 140 is further configured to control the terminal device where the security management application client 110 is located to access the target application according to the application access permission.

In some optional implementations, the application gateway 140 is configured to determine a target information acquisition type corresponding to the second target access policy, and acquire target access information corresponding to the target application according to the target information acquisition type in a process where the terminal device where the security management application client is located accesses the target application; and the application gateway 140 is further configured to send the target access information to the security management application server 120; and
the security management application server 120 is configured to save the received target access information.

In some optional implementations, the target information acquisition type is determined by the application gateway 140 through a third configuration file, where the third configuration file is used for characterizing a correspondence between a target access policy and an information acquisition type, and the third configuration file is provided by the security management application server 120.

In some optional implementations, the security management application server is connected to the security management application client through a root certificate, and is connected to the application gateway through an intermediate certificate.
The security management application server 120 is configured to determine the first configuration file through a corresponding management platform, and send the first configuration file to the security management application client 110 and the application gateway 140 respectively. The first configuration file includes an application domain name set, and the application domain name set includes application domain names of a plurality of applications and corresponding wildcard domain names.
The security management application client 110 is configured to determine a target application domain name of an application to be accessed after detecting an access request initiated by a terminal device where the security management application client 110 is located; if an application domain name or a wildcard domain name matching with the target application domain name is matched in the application domain name set, it is determined that the application to be accessed is the target application, and the domain name resolution request is generated, where the target application is an application corresponding to the application domain name or the wildcard domain name matching with the target application domain name; if the application domain name or the wildcard domain name matching with the target application domain name is not matched in the application domain name set, it is determined that the application to be accessed is a non-target application, and access prompt information is generated to be displayed on the terminal device where the security management application client is located to prompt that the access request is an invalid request.

In some optional implementations, the security management application client 110 includes:
a creating unit, configured to create a mirror file of the domain name resolution request; and
a file sending unit, configured to send the mirror file to the central domain name system 130.

For further functional descriptions of the above modules and units, reference may be made to the above corresponding embodiments, and details will not be repeated here.

In the present embodiment, the access control system is presented in the form of functional units, where the units refer to an ASIC (Application Specific Integrated Circuit) circuit, a processor and a memory that execute one or more software or fixed programs, and/or other devices that can provide the above functions.

The embodiment of the present disclosure further provides a computer device, which has the above access control system shown in FIG. 1.

Please refer to FIG. 6, which is a schematic diagram of a structure of a computer device according to an optional embodiment of the present disclosure. As shown in FIG. 6, the computer device includes: one or more processors 10, a memory 20, and interfaces for connecting various components, including a high-speed interface and a low-speed interface. The components are in communication connection with each other by using different buses, and may be installed on a public main board or installed in other manners as required. The processor can process instructions executed in the computer device, including instructions stored in the memory or on the memory to display graphic information of a GUI on an external input/output apparatus (such as a display device coupled to the interface). In some optional implementations, a plurality of processors and/or a plurality of buses may be used together with a plurality of memories and a plurality of memories, if required. Similarly, a plurality of computer devices may be connected, and each device provides part of necessary operations (for example, as an array of security management application servers, a group of blade security management application servers, or a multi-processor system). In FIG. 6, one processor 10 is taken as an example.

The processor 10 may be a central processor, a network processor or a combination thereof. The processor 10 may further include a hardware chip. The hardware chip may be an Application Specific Integrated Circuit (ASIC), a Programmable Logic Device (PLD) or a combination thereof. The Programmable Logic Device may be a Complex Programmable Logic Device (CPLD), a Field Programmable Gate Array (FPGA), a Generic Array Logic (GAL) or any combination thereof.

The memory 20 has instructions stored therein. The instructions are executable by at least one processor 10 to enable the at least one processor 10 to perform the method shown in the above embodiments.

The memory 20 may include a program storage area and a data storage area. The program storage area may store an operating system and application programs required by at least one function. The data storage area may store data created according to the use of the computer device. In addition, the memory 20 may include a high-speed random access memory, and may also include a non-transitory memory, such as at least one magnetic disk storage device, a flash memory device or other non-transitory solid-state memory device. In some optional implementations, the memory 20 may optionally include a memory remotely provided relative to the processor 10. These remote memories may be connected to the computer device through a network. Examples of the network include, but are not limited to, the Internet, an intranet, a local area network, a mobile communication network, and a combination thereof.

The memory 20 may include a volatile memory, such as a random access memory. The memory may also include a non-volatile memory, such as a flash memory, a hard disk or a solid-state drive. The memory 20 may also include a combination of the above-mentioned types of memories.

The computer device further includes an input apparatus 30 and an output apparatus 40. The processor 10, the memory 20, the input apparatus 30 and the output apparatus 40 may be connected by a bus or in other manners. In FIG. 6, the connection by the bus is taken as an example.

The input apparatus 30 may receive input digital or character information, and generate key signal input related to user settings and function control of the computer device, such as a touch screen, a keypad, a mouse, a trackpad, a touchpad, an indicator bar, one or more mouse buttons, a trackball, a joystick, etc. The output apparatus 40 may include a display device, an auxiliary lighting apparatus (such as an LED), a tactile feedback apparatus (such as a vibration motor), etc. The display device includes, but is not limited to, a liquid crystal display, a light emitting diode, a display and a plasma display. In some optional implementations, the display device may be a touch screen.

The present disclosure further provides a computer-readable storage medium. The method according to the embodiments of the present disclosure may be implemented in hardware or firmware, or the method may be implemented as computer codes that may be recorded in a storage medium, or the method may be implemented as computer codes that are originally stored in a remote storage medium or a non-transitory machine-readable storage medium and downloaded through a network and will be stored in a local storage medium, so that the method described herein may be stored in such software processing on a storage medium using a general-purpose computer, a special-purpose processor, or programmable or special-purpose hardware. The storage medium may be a magnetic disk, an optical disc, a read-only memory, a random-access memory, a flash memory, a hard disk, a solid-state drive, or the like. Further, the storage medium may also include a combination of the above types of memories. It may be understood that the computer, the processor, the microprocessor controller, or the programmable hardware includes a storage component that may store or receive software or computer codes, and when the software or the computer codes are accessed and executed by the computer, the processor, or the hardware, the method shown in the above embodiments is implemented.

A part of the present invention may be applied as a computer program product, for example, computer program instructions, which when executed by a computer, may call or provide the method and/or the technical solution according to the present invention through the operation of the computer. Those skilled in the art should understand that the computer program instructions exist in a computer-readable medium in forms including but not limited to a source file, an executable file, and an installation package file. Correspondingly, the computer program instructions are executed by the computer in manners including but not limited to: the computer directly executes the instructions, or the computer compiles the instructions and then executes a corresponding compiled program, or the computer reads and executes the instructions, or the computer reads and installs the instructions and then executes a corresponding post-installation program. Here, the computer-readable medium may be any available computer-readable storage medium or communication medium accessible by the computer.

It may be understood that before using the technical solutions disclosed in the embodiments of the present disclosure, a user should be informed of the type, use scope, use scene, etc. of personal information involved in the present disclosure in an appropriate manner according to relevant laws and regulations, and the user's authorization should be obtained.

For example, when receiving an active request from a user, prompt information is sent to the user, so as to explicitly prompt the user that the operation requested to be performed will require the acquisition and use of the personal information of the user. Thus, the user can independently select whether to provide personal information to software or hardware such as an electronic device, an application, a server or a storage medium that performs the operation of the technical solutions of the present disclosure according to the prompt information.

As an optional but non-restrictive implementation, the manner of sending the prompt information to the user in response to receiving the active request from the user may be, for example, a pop-up window, and the prompt information may be presented in the pop-up window in a text form. In addition, the pop-up window may also carry a selection control for the user to select "agree" or "disagree" to provide personal information to the electronic device.

It can be understood that the above process of notifying and obtaining user authorization is only illustrative, and does not constitute a limitation to the implementations of the present disclosure. Other manners that satisfy relevant laws and regulations may also be applied to the implementations of the present disclosure.

Although the embodiments of the present disclosure have been described with reference to the drawings, those skilled in the art can make various modifications and variations without departing from the scope of the present disclosure. These modifications and variations are all within the scope defined by the appended claims.

## Claims

1. An access control method for an application, wherein the method is applied to an access control system, the access control system comprises a security management application client, a security management application server, a central domain name system and an application gateway, and the method comprises:
generating, by the security management application client, a domain name resolution request after detecting an access request from a terminal device where the security management application client is located for a target application, and sending the domain name resolution request to the central domain name system;
performing, by the central domain name system, domain name resolution on the domain name resolution request to obtain a target application domain name of the target application, and sending the target application domain name to the application gateway; and
determining, by the application gateway, a target access policy for the target application based on a matching result of the target application domain name in a first configuration file, and controlling, based on the target access policy, the terminal device where the security management application client is located to access the target application, wherein the first configuration file is used for characterizing a correspondence between application domain names and access policies, and the first configuration file is provided by the security management application server.

2. The method according to claim 1, wherein controlling, by the application gateway and based on the target access policy, the terminal device where the security management application client is located to access the target application comprises:
in response to the target access policy being a first target access policy, sending, by the application gateway, a first access resource to the security management application client to prevent the terminal device from accessing the target application.

3. The method according to claim 2, wherein the method further comprises:
sending, by the application gateway, access blocking information to the security management application server to prompt that the terminal device is prevented from accessing the target application; and
receiving and saving, by the security management application server, the access blocking information.

4. The method according to claim 3, wherein sending, by the application gateway, the access blocking information to the security management application server comprises:
starting, in the application gateway, a timing task according to a preset period, wherein the timing task is a task configured to send the access blocking information to the security management application server at regular intervals.

5. The method according to claim 1, wherein controlling, based on the target access policy, the terminal device where the security management application client is located to access the target application comprises:
in response to the target access policy being a second target access policy, sending, by the application gateway, a second access resource to the security management application client to allow the terminal device where the security management application client is located to access the target application.

6. The method according to claim 5, wherein controlling, based on the target access policy, the terminal device where the security management application client is located to access the target application further comprises:
determining, in the application gateway, an application access permission of the terminal device where the security management application client is located to access the target application through a preset second configuration file, wherein the second configuration file is used for characterizing a correspondence between a same application and application access permissions of a plurality of security management application clients, and the second configuration file is provided by the security management application server; and
controlling, by the application gateway, the terminal device where the security management application client is located to access the target application according to the application access permission.

7. The method according to claims 5 or 6, wherein the method further comprises:
determining, by the application gateway, a target information acquisition type corresponding to the second target access policy, and acquiring, in a process that the terminal device where the security management application client is located accesses the target application, target access information corresponding to the target application according to the target information acquisition type;
sending, by the application gateway, the target access information to the security management application server; and
saving, by the security management application server, the received target access information.

8. The method according to claim 7, wherein the target information acquisition type is determined by the application gateway through a third configuration file, the third configuration file is used for characterizing a correspondence between a target access policy and an information acquisition type, and the third configuration file is provided by the security management application server.

9. The method according to claim 1, wherein the security management application server is connected to the security management application client through a root certificate, and the security management application server is connected to the application gateway through an intermediate certificate, and
the method further comprises:
determining, by the security management application server, the first configuration file through a corresponding management platform, and sending the first configuration file to the security management application client and the application gateway respectively, wherein the first configuration file comprises an application domain name set, and the application domain name set comprises application domain names of a plurality of applications and corresponding wildcard domain names; and
generating, by the security management application client, the domain name resolution request after detecting the access request from the terminal device where the security management application client is located for the target application comprises:
determining, in the security management application client, a target application domain name of an application to be accessed after detecting an access request initiated by the terminal device where the security management application client is located;
in response to an application domain name or a wildcard domain name matching with the target application domain name being matched in the application domain name set, determining that the application to be accessed is the target application, and generating the domain name resolution request, wherein the target application is an application corresponding to the application domain name or the wildcard domain name matching with the target application domain name; and
in response to the application domain name or the wildcard domain name matching with the target application domain name being not matched in the application domain name set, determining that the application to be accessed is a non-target application, and generating access prompt information to be displayed on the terminal device where the security management application client is located to prompt that the access request is an invalid request.

10. The method according to claim 9, wherein the process of sending, by the security management application client, the domain name resolution request to the central domain name system comprises:
creating, in the security management application client, a mirror file of the domain name resolution request; and
sending, the mirror file to the central domain name system.

11. An access control system, comprising:
a security management application client, configured to generate a domain name resolution request after detecting an access request from a terminal device where the security management application client is located for a target application, and send the domain name resolution request to a central domain name system;
the central domain name system, configured to perform domain name resolution on the domain name resolution request to obtain a target application domain name of the target application, and send the target application domain name to an application gateway;
the application gateway, configured to receive the target application domain name, determine, based on a matching result of the target application domain name in a first configuration file, a target access policy for the target application, and control, based on the target access policy, the terminal device where the security management application client is located to access the target application, wherein the first configuration file is used for characterizing a correspondence between application domain names and access policies, and the first configuration file is provided by a security management application server; and
the security management application server, configured to store the first configuration file.

12. The system according to claim 11, wherein the application gateway is further configured to:
in response to the target access policy being a first target access policy, send a first access resource to the security management application client to prevent the terminal device from accessing the target application.

13. A computer device, comprising:
a memory and a processor, wherein the memory is in communication connection with the processor, the memory has a computer instruction stored therein, and the processor executes the computer instruction to perform the application access control method according to any of claims 1 to 10.

14. A computer-readable storage medium, wherein that the computer-readable storage medium has a computer instruction stored thereon, and the computer instruction are used for causing a computer to perform the application access control method according to any of claims 1 to 10.

15. A computer program product, wherein that the computer program product comprises a computer instruction, and the computer instruction is used for causing a computer to perform the application access control method according to any of claims 1 to 10.
